Europäisches Patentamt

**European Patent Office**

Office européen des brevets

(19)

(11) Publication number: **0 026 950**
A1

# EUROPEAN PATENT APPLICATION

(12)

(21) Application number: **80200916.7**

(22) Date of filing: **30.09.80**

(51) Int. Cl.³: **B 62 J 5/00,** F 21 K 7/00

(30) Priority: **05.10.79 NL 7907390**

(43) Date of publication of application: **15.04.81**
**Bulletin 81/15**

(84) Designated Contracting States: **DE FR GB**

(71) Applicant: **Vergonet, Pierre Frans,**
**Postbus 373 Corellistraat 13c, NL-8901 BD Leeuwarden**
**(NL)**

(72) Inventor: **Vergonet, Pierre Frans,**
**Postbus 373 Corellistraat 13c, NL-8901 BD Leeuwarden**
**(NL)**

(54) **Electronic rear-light for bicycle or moped.**

�커 Circuits for a rear light for a bycicle or a moped using
light emitting diodes.

## An electronic rear-light for a bicycle or a moped

The invention relates to a rear-light for a bicycle or a moped inwhich a circuit with Light Emitting Diodes, LED's has been applied. In a suitable model of rear-light has been placed a circuit of Led's.

The tradional rearlight consist of a body, inwich a glow-lamp with a screw-thread or a bayonet-catch has been placed.

The disadvantage of this type of rear-light is the short duration of the glow-lamp. Mostly a glow-lamp will break by trembling of the bicycle on the road, before it gets worn out. An incidental disadvantange is that the glow-lamp sometimes has been taken out by others. This is possible because the lamp is interchangeable quickly. An other disadvantange of glow-lamps is the low output, which is about 35% or less.

A soloution for the problem with glow-lamp rear-lights seemed the German invention inwhich a number of Led's have been used in a rear-light. This is written in the German "Offen legungsschrift" 26.33.270.

In here two methods are descriped, the first method contains : two Led's,which are connected inverse-parallel in series with the front-light, which is a glow lamp. A second method is to connect a Led inverse-parallel to a silicon diode, the circuit is connected in series again with the front light. The disadvantage of this series circuits is : the duration of the complete lighting parts of the bicycle depends on the duration of the glow-lamp. Besides the characteristic of the glow-lamp is also determining for the properties of the Led's. A circuit in series of the front and rear-lighting of a bicycle or a moped, is not usual.

The invention as claimed is intended to provide a rear-light which does not have the disadvantages of the glow-lamp lighting and which does not have the disadvantages of the german invention with Led's as mention above.

0026950

This can be obtained by using a parallelelcircuit, in a given case, an inverseparallel circuit of a number of Led's, the Led's will be pre-connected by a capacitor and the rear-light work's independent of the front-light.

Abstract:

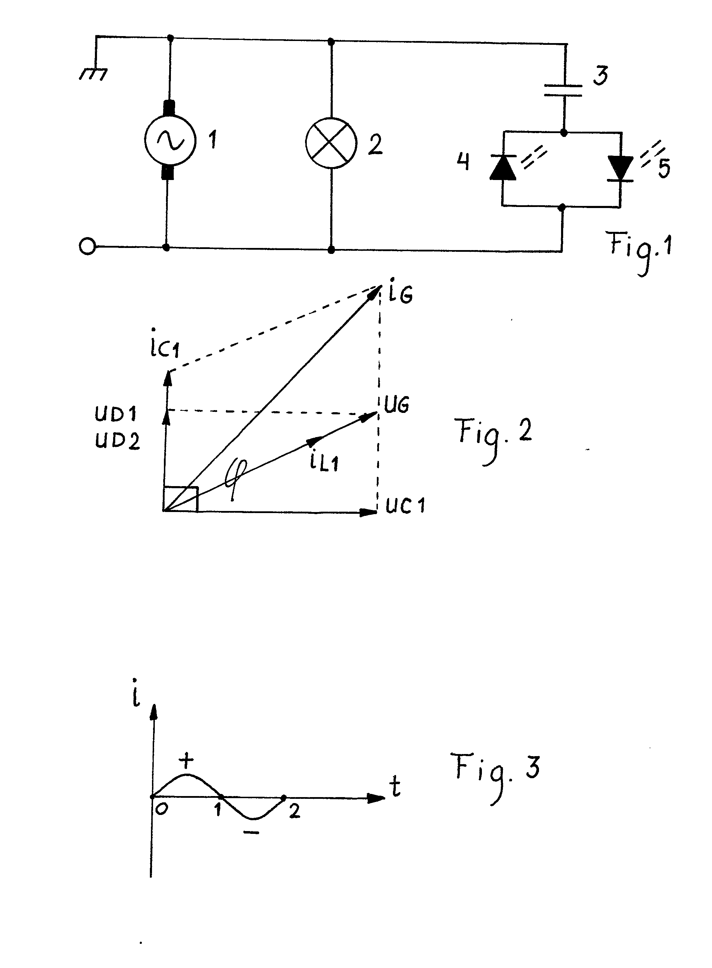

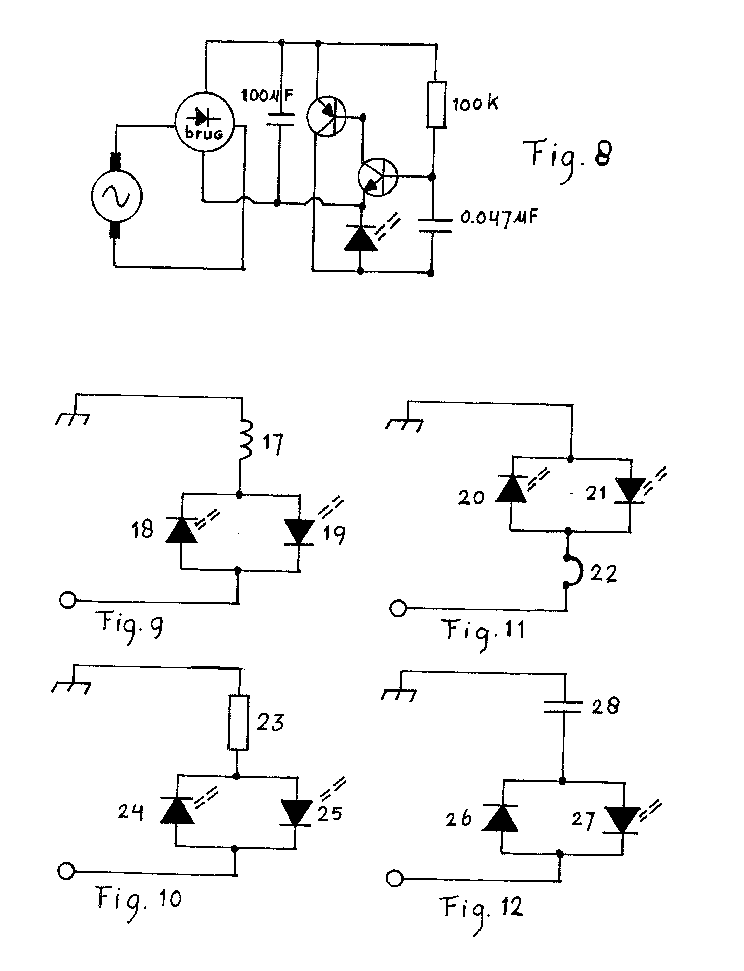

An electronic rear-light for a bicycle or a moped. For the working of the circuit, we have to look at the circuit which is drawed in fig. 1.

In the vectordiagram of fig.2. and the graphical tensionfield of the dynamo in fig.3, we see that the current and the tension for alternating current is $90^{\circ}$ out of face, Icl and Ucl, the capacitor does not take much power, except some dielectrical losses. The tension of both Led's Ud1 and Ud2 are in phase with Ic1 while the vectorial sum of both currents of 1d1 and Id2 are similar to the current which goes through the capacitor C1. Further the current is shown by the glow-lamp L1 which is in phase with Ug of the dynamo. D1 conducts fig.3 during the positive part of the alternating tension. After 5 R.C. C1 will be loaded completely, during that time current goes through the Led, the Led will burn, while during the negative period in the other Led current will go through and this will burn. One Led loads the capacitor, while the other Led unloads the capacitor. The circuit of the Led's can be build in different ways. Not only a capcitor can be used as a pre-connected component, but also a few other possibiloties are shown. The requirements for bicycle rearlight for the Netherlands are published in the Official Government Gazette of Monday august 23rd 1971 nr.161. An adaptation to these requirements of the present day of technic is necessary, because no Led's have been used before. The invention will be illustrated by some drawings inwhich some models are shown.

Fig.1. 1. the dynamo,2 the front light, 3 pre-connected capacitor, 4 and 5 two led's.

Fig.2. shouws the vectordiagram of the connection with condensor.

Fig.3. The dynamo voltage.

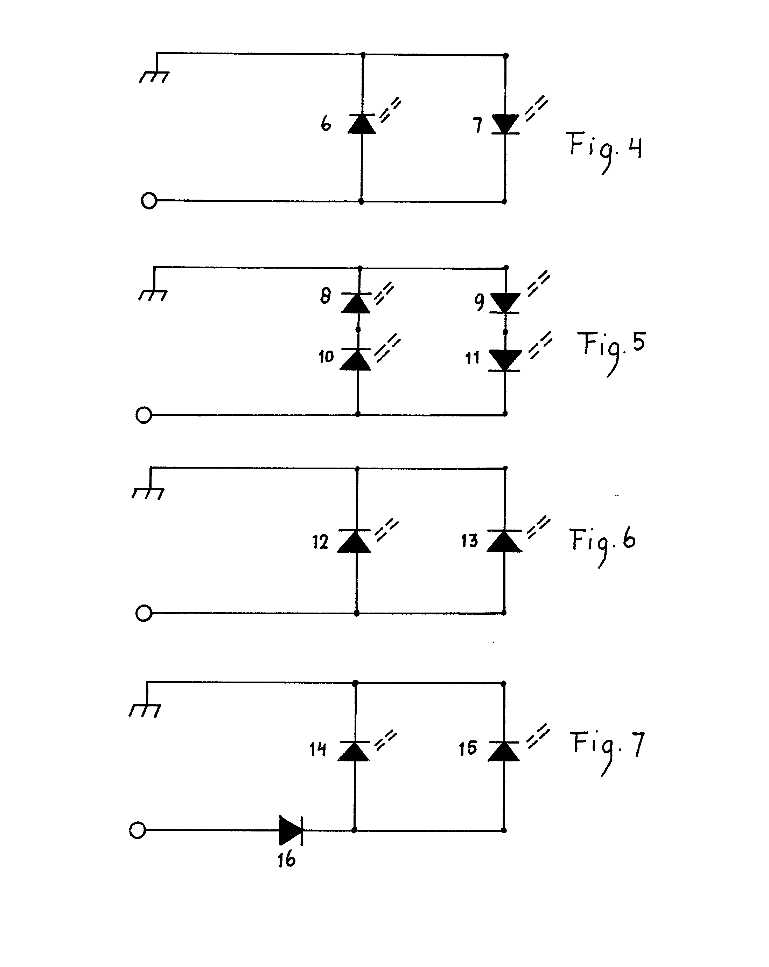

Fig.4. 6 and 7 two led's which are suited for dynamo currency.

Fig.5. 8,9,10,11 four led's which are connected in series to make it suitable for dynamo voltage.

Fig.6. A Led rear-light for direct current power supply, therefor both Led's 12 and 13 are connected in parallel.

Fig.7. A circuit for direct current power supply, the Led's 14 and 15 are pre-connected by a diode 16.

0026950

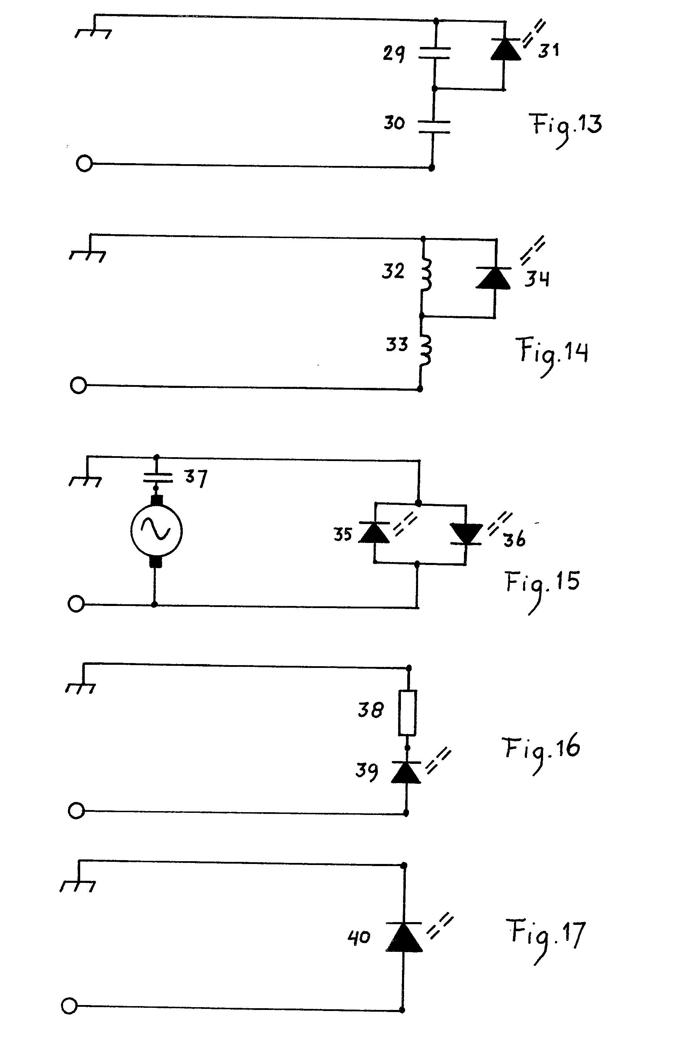

Fig.8. A pulse-circuit inwhich more Led's can be connected parallel.

Fig.9. An inductive pre-connection coil, 17 and Led's 18 and 19.

Fig.10. A resitance-wire pre-connection, inwhich 2o and 21 are both Led's and 22 the resistance wires.

Fig.11. resistance 23, 24 and 25 two Led's.

Fig.12. 26 is a diode, 27 the Led and 28 pre-connected capacitor.

Fig.13. 29 and 30 a capacitor and 31 the Led.

Fig.14. 32 a coil and 33 acoil, 34 the Led.

Fig.15. 35 and 36 are Led's 37 a pre-connected capacitor.

Fig.16. 38 is a pre-connected resistance and 39 a Led.

Fig.17. A Led 40, which can be connected directly with the dynamo, without a preconnected component.

CLAIMS:

1. An electronic rear-light for a bicycle or a moped with the distinguishing mark, that the light is connected parallel with the dynamo or other power-supplies.

2. An electronic rear-light as claimed in claim 1 with the distinguishing mark, that one side is connected with the frame of the bicycle or moped.

3. Electronic rear-light as claimed in claim 1 and 2. with the distinguishing mark, that the rear-light is pre-connected with a capacitor.

4. Electronic rear-light as claimed in the claims 1,2 and 3 with the distinguishing mark,that the capacitor is connected in series with a few Led's.

5. Electronic rear-light as claimed in the claims 1,2,3 and 4 with the distinguishing mark, that the Led's with capacitor are on print in a casting mass or in a lamp-socket.

6. Electronic rear-light as claimed in the claims 1,2,3,4 and 5 with the distinguishing mark, that the Led's connected inverse-parallel, two by two and they are not preconnected, fig.4 model 2.

7. Electronic rear-light according model 3 fig.5, with the distinguishing mark, that per branch the inverseparallel connected Led's can be two or more in series.

8. Electronic rear-light according model 4, fig. 6 with the distinguishing mark, that a few Led's are connected parallel. This is necessary for direct current.

9. Electronic rear-light according model 5, fig 7 with the distinguishing mark, that in series with two or more led's parallel there is a rectifying diode.

10. Electronic rear-light according to claim 8, with the distinguishing mark, that evry parallel branch consists of one or more Led's connected in series.

11. Electronic rear-light according to model 6 fig. 8 with the distinguishing mark, that the Led's are in pulse-operation, in order to obtain a larger lightproducing.

12. Electronic rear-light according model 7 fig.9 with the distinguishing mark, that two ore more led's in parallel will be pre-connected inductive.

13. Electronic rear-light according model 8. fig. 10, with the distinguishing mark, that two or more Led's inverse-parallel will be pre-connected by a Voltage Dependent Resistance.

14. Electronic rear-light according model 9, fig. 10 with the distinguishing mark, that two or more inverse-parallel connected Led's will be pre-connected by a P.T.C. ( Positive temperature Coefficient ) resistance.

15. Electronic rear-light according model 10, fig. 11 with the distinguishing mark, that two or more inverse parallel connected Led's will be pre-connected by a piece of resistance-wire.

16. Electronic rear-light as claimed in claim 15,with the distinguishing mark, that the current conductor for the dynamo to the rear-light, is the resistance-wire.

17. Electronic rear-light according to model 11 fig. 12, with the distinguishing mark, that a diode is connected inverse-parallel with the Led.

18. Electronic rear-light according to model 12 fig. 13, with the distinguishing mark, that the power supply happens by capacitive voltage division.

19. Electronic rear-light according to model 13 fig. 14, with the distinguishing mark, that the powersupply happens by inductive voltage division.

0026950

20. Electronic rear-light according to model 14, fig. 15, with the distinguishing mark, that two Led's are connected inverse parallel and the pre-connected capacitor is built-in, in the dynamo.

21. Electronic rear-light according to model 15, fig. 16, with the distinguishing mark, that one Led will be pre-connected by a resistance.

22. Electronic rear-light according to model 16, fig. 17 with the distinguishing mark, that this Led is connected parallel to the dynamo, without a pre-connected resistance or a capacitor.

23. Claims 1 up to and including 22 are applicable for bicycle rear-lights and moped.

Fig.1

Fig. 2

Fig. 3

100 $\mu$F

100 K

brug

0.047 $\mu$F

Fig. 8

17

18

19

Fig. 9

20

21

22

Fig. 11

23

24

25

Fig. 10

28

26

27

Fig. 12

0026950

Fig. 4

Fig. 5

Fig. 6

Fig. 7

0026950

Fig.13

Fig.14

Fig.15

Fig.16

Fig.17

## EUROPEAN SEARCH REPORT

European Patent Office

0026950

Application number

EP 80 20 0916

| Category | Citation of document with indication, where appropriate, of relevant passages | Relevant to claim |
|---|---|---|
| X | FR - A - 2 247 375 (JACOB)<br>* Figure 1 * | 1,2 |
|  | DE - A - 2 659 025 (EURINGER)<br>* Figure 1 * | 2 |
|  | NL - A - 78 02318 (HAZEMEIJER)<br>* Figures 1,3,5 * | 3,4 |
| D | DE - A - 2 633 270 (SIEMENS)<br>* Figures 1,2 * | 6 |
|  | FR - A - 2 340 410 (MINNESOTA MINING AND MANUFACTURING COMPANY)<br>* Figures 1,4,7 * | 8,11 |

### DOCUMENTS CONSIDERED TO BE RELEVANT

**CLASSIFICATION OF THE APPLICATION (Int. Cl.³)**

B 62 J 5/00
F 21 K 7/00

**TECHNICAL FIELDS SEARCHED (Int. Cl.³)**

B 62 J 5/00
5/04
5/06
F 21 K 7/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 05-01-1981 | ONILLON |

EPO Form 1503.1 06.78